# EUROPEAN PATENT APPLICATION

(11) **EP 4 717 361 A2**
(43) Date of publication of application: **01.04.2026**
(21) Application number: 25186765.1
(22) Date of filing: 01.07.2025
(51) Int. Cl.: B03C 1/032, B03C 1/033, B03C 1/28, B03C 1/034

(54) **IRON REMOVAL DEVICE**

(30) Priority: 25.09.2024 KR 20240130152
(71) Applicant: Samsung SDI Co., Ltd, Gyeonggi-do 17084 (KR)
(72) Inventor: PARK, Munsu, 17084 Yongin-si (KR); KIM, Hyunki, 17084 Yongin-si (KR); KIM, Sunjae, 17084 Yongin-si (KR); BAE, Seungjae, 17084 Yongin-si (KR); LEE, Gilwoo, 17084 Yongin-si (KR); KIM, Byungsoo, 17084 Yongin-si (KR); BACK, Chang-Won, 17084 Yongin-si (KR); LEE, Taeho, 17084 Yongin-si (KR); KANG, Dongjin, 17084 Yongin-si (KR)
(74) Representative: Marks & Clerk LLP

(57) **Abstract**

An iron removal device includes a housing having a washing liquid inlet and a washing liquid outlet, a head coupled to the housing and configured to spray a washing liquid onto a screen stack in a washing liquid flow path leading from the washing liquid inlet to the washing liquid outlet within the housing, a washing liquid inlet pipe coupled to the head and configured to supply the washing liquid to the head, and a washing liquid outlet pipe coupled to the housing and configured to discharge the washing liquid out from the housing. The head includes a body accommodating the washing liquid, and spray parts separately on a washing liquid spray surface of the body facing the screen stack and configured to spray the washing liquid onto the screen stack.

## Description

### BACKGROUND

### 1. Field

The present disclosure relates to an iron removal device.

### 2. Description of the Related Art

With the recent rapid spread of electronic devices that use batteries, such as mobile phones, laptop computers, and electric vehicles, the demand for energy-dense and high-capacity rechargeable batteries is rapidly increasing. Accordingly, research and development to improve the performance of lithium rechargeable batteries is being actively conducted.

A lithium rechargeable battery is a battery that includes a positive electrode and a negative electrode that contain active materials capable of intercalating and deintercalating lithium ions, and an electrolyte, which produces electrical energy through oxidation and reduction reactions when lithium ions are intercalated/deintercalated from the positive electrode and the negative electrode.

In the process of manufacturing positive and negative active materials, each active material may contain impurities containing iron components (or magnetic foreign substances, hereinafter referred to as magnetic foreign substances).

Magnetic foreign substances may reduce the proportion of active material in each of the positive electrode and the negative electrode, which may reduce the energy capacity of the finished rechargeable battery and cause safety issues.

To prevent this, an iron removal process is being added to the manufacturing process to separate/remove magnetic foreign substances from the raw active material and increase the concentration of the active material. There are two types of iron removal processes: wet and dry.

Unlike the dry process, in which the active raw material flows into an iron removal device in powder form, in the wet process, the active raw material flows into the iron removal device in the form of a viscous slurry. The active raw material may remain in the iron removal device during the iron removal process.

Due to the characteristic of the iron removal device which may repeat the iron removal process several times to obtain the required concentration of active material, the active raw material (or residual slurry, hereinafter referred to as residual slurry) remaining in the iron removal device may reduce the iron removal efficiency.

The above information disclosed in this Background section is for enhancement of understanding of the background of the present disclosure, and therefore, it may contain information that does not constitute related (or prior) art.

### SUMMARY

The present disclosure attempts to provide an iron removal device capable of improving the washing efficiency of residual slurry.

Technical solutions obtainable from the present disclosure are not limited to the above-mentioned technical solutions. Further, other unmentioned technical solutions would be clearly understood from the following description by those having ordinary skill in the technical field to which the present disclosure pertains.

An iron removal device according to an embodiment of the present disclosure for solving the above technical problem includes a housing having a washing liquid inlet and a washing liquid outlet, a head coupled to the housing and configured to spray a washing liquid onto a screen stack in a washing liquid flow path leading from the washing liquid inlet to the washing liquid outlet within the housing, a washing liquid inlet pipe coupled to the head and configured to supply the washing liquid to the head, and a washing liquid outlet pipe coupled to the housing and configured to discharge the washing liquid out from the housing, wherein the head includes a body accommodating the washing liquid, and spray parts (e.g. a plurality of spray parts) separately arranged on a washing liquid spray surface of the body facing the screen stack and configured to spray the washing liquid onto the screen stack.

Each of the spray parts (e.g. the plurality of spray parts) may include a spray hole configured to discharge the washing liquid accommodated in the body.

The spray parts (e.g. the plurality of spray parts) may be arranged at substantially equal intervals (e.g. may be substantially equidistantly arranged) on the washing liquid spray surface of the body.

The angle between adjacent spray parts (e.g. adjacent spray parts of the plurality of spray parts) may be approximately 90 degrees.

The washing liquid spray surface of the body may have a recessed shape extending toward a center of the body.

The number of the spray parts may be at least 40.

The spray parts (e.g. the plurality of spray parts) may be arranged radially on the washing liquid spray surface of the body.

The spray parts (e.g. the plurality of spray parts) may further include nozzles (e.g. a plurality of nozzles) and each nozzle (e.g. each nozzle of the plurality of nozzles) may be coupled to one of the spray holes (e.g. the spray hole of one of the plurality of spray parts).

A central axis of the nozzle (e.g. each nozzle) may be substantially perpendicular to the washing liquid spray surface of the body.

A central axis of the nozzle (e.g. each nozzle) may be substantially parallel to a stacked direction of the screen stack.

The screen stack may include a first screen having slits (e.g. including a plurality of slits), a second screen having grid patterns (e.g. including a plurality of grid patterns), and a fixing member that fixes (e.g. is configured to fix) the stacked configuration of the first screen and the second screen.

A second screen stack including a stack of second screens may be between (e.g. a plurality of the second screens may be stacked between) two first screen stacks each including a stack of first screens (e.g. in which a plurality of the first screens are stacked).

The first screen may include a first guide surrounding an outer surface.

The screen stack may further include a spacer on one of the two first screen stacks closest to the head among the two first screen stacks.

The spacer may include a second guide, a ring member inside the second guide and having an outer diameter smaller than an outer diameter of the second guide, and a connecting member connecting (e.g. coupling) the second guide to the ring member.

A height of the second guide may be higher than a height of the ring member.

At least some of the above and other features of the invention are set out in the claims.

According to the present disclosure, the time required to wash the inside of the iron removal device may be reduced, and the amount of washing liquid consumed may also be reduced.

According to the present disclosure, more residual slurry may be removed from the iron removal device even when washing is performed under the same conditions compared to a related art device.

Effects that may be obtained from the present disclosure will not be limited to only the above-described effects, and other effects which are not described herein will become apparent to those skilled in the art from the following description.

### BRIEF DESCRIPTION OF THE DRAWINGS

The accompanying drawings illustrate preferred embodiments of the present disclosure and, together with the foregoing disclosure, serve to provide further understanding of the present disclosure, but the present disclosure is not to be construed as being limited to the drawings.
FIG. 1 is a schematic illustration of an iron removal system according to an embodiment of the present disclosure.
FIG. 2 is a partial perspective view of a portion of an iron removal device of FIG. 1.
FIG. 3 is a lower perspective view of a head according to the first embodiment of the present disclosure.
FIG. 4 is a lower perspective view of a head according to the second embodiment of the present disclosure.
FIG. 5 is a cross-sectional view of the head of FIG. 4.
FIG. 6 is a bottom view of the head of FIG. 4.
FIG. 7 is a cross-sectional view of a head according to the third embodiment of the present disclosure.
FIG. 8 is a bottom view of the head of FIG. 7.
FIG. 9 is a cross-sectional view of a head according to the fourth embodiment of the present disclosure.
FIG. 10 is a bottom view of the head of FIG. 9.
FIG. 11 is a perspective view of a first screen of the screen stack of FIG. 2.
FIG. 12 is a perspective view of a second screen of the screen stack of FIG. 2.
FIG. 13 is a perspective view of the first screen of the screen stack according to another embodiment of the present disclosure.
FIG. 14 illustrates a spacer of a screen stack according to the fifth embodiment of the present disclosure.

### DETAILED DESCRIPTION

Hereinafter, preferred embodiments of the present disclosure will be described in detail with reference to the accompanying drawings. Prior to making the description, the terms and words used in the specification and claims of the present disclosure are not to be construed in their ordinary or dictionary sense, but rather as meanings and concepts conforming to the present disclosure based on the principle that the inventor can appropriately define the concepts of the terms to explain the present disclosure in the best manner.

Accordingly, it is to be understood that the detailed description, which will be disclosed along with the accompanying drawings, is intended to describe the embodiments of the present invention and is not intended to represent all technical ideas of the present disclosure, and therefore it should be understood that various equivalents and modifications may exist which may replace the embodiments described at the time of the application.

It should be further understood that the terms "comprise" and "include" and/or "comprising" and "including," when used in this specification, specify the presence of stated features, numbers, steps, operations, elements, and/or components, but do not preclude the presence or addition of one or more other features, numbers, steps, operations, elements, components, and/or groups thereof. Further, when describing embodiments of the present disclosure, the terms "may" and "may be" may include "one or more embodiments of the present disclosure."

In addition, for ease of understanding of the present disclosure, the accompanying drawings are not drawn to actual scale, but the dimensions of some components may be exaggerated. In addition, the same reference numbers may be assigned to the same components in different embodiments.

Stating that two objects of comparison are "the same" means that they are "substantially the same."

Therefore, substantially identical may include a deviation that is considered low in the art-for example, a deviation of less than 5%. Additionally, uniformity of a parameter in a certain region may mean uniformity from an average perspective.

Although the terms "first," "second," and the like are used to explain various components, the components are not limited to such terms. These terms are only used to distinguish one component from another component, and unless explicitly stated to the contrary, the second component may be referred to as the first component.

Throughout the specification, unless otherwise stated, each component may be singular or plural.

It should also be understood that when a first element or layer is referred to as being "on" or "beneath" a second element or layer, the first element may be disposed directly on or beneath the second element or may be disposed indirectly on or beneath the second element with a third element or layer being disposed between the first and second elements or layers.

It should be noted that if it is stated in the specification that one component is "connected," or "coupled" to another component, a third component may be "connected," "coupled," or "joined" between the first and second components, although the first component may be directly connected, coupled, or joined to the second component. In addition, when a part is electrically coupled to another part, it includes not only cases where the two parts are directly connected, but also cases where they are connected with another element therebetween.

When reference is made to "A and/or B" throughout the specification, it means A, B, or A and B, unless specifically stated to the contrary. That is, "and/or" includes all or any combination of the plurality of listed items. When reference is made to "C to D", it means that it is greater than or equal to C and less than or equal to D, unless otherwise specified.

### Iron removal system 1

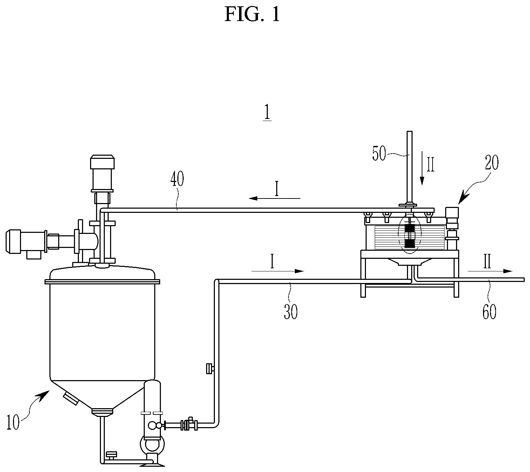

FIG. 1 is a schematic illustration of an iron removal system 1 according to an embodiment of the present disclosure. Referring to FIG. 1, the iron removal system 1 may include a raw material tank 10 for storing raw materials for electrode active materials for rechargeable batteries, and an iron removal device 20 for receiving the raw materials for electrode active materials from the raw material tank 10 and for separating impurities containing iron components (or magnetic foreign substances, hereinafter referred to as magnetic foreign substances) from the raw materials.

The raw active material may be either a positive electrode active material slurry or a negative electrode active material slurry. The positive electrode active material slurry and the negative electrode active material slurry may contain magnetic foreign substances that are introduced during manufacturing.

As a positive electrode active material, a compound capable of reversible intercalation and deintercalation of lithium (i.e. a lithiated intercalation compound) may be used. In one or more embodiments, at least one composite oxide of lithium and a metal selected from cobalt, manganese, nickel, and a combination thereof may be used.

The composite oxide may be a lithium transition metal composite oxide, such as lithium nickel-based oxides, lithium cobalt-based oxides, lithium manganese-based oxides, lithium iron phosphate-based compounds, cobalt-free nickel-manganese oxides, or a combination thereof.

For example, a compound represented by any one of the following chemical formulas may be used as the positive electrode active material: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formula, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In one or more embodiments, the positive electrode active material may be a high-nickel positive electrode active material in which the nickel content is approximately 80 mol% or more, approximately 85 mol% or more, approximately 90 mol% or more, approximately 91 mol% or more, or approximately 94 mol% or more and approximately 99 mol% or less, based on 100 mol% of metal excluding lithium in the lithium transition metal composite oxide. The high-nickel positive electrode active material may be configured achieve high capacity and may be applied to high-capacity, high-density lithium rechargeable batteries.

The positive electrode active material slurry may further include a binder and/or a conductive material in the positive electrode active material. For example, the positive electrode may further include an additive that is configured to function as a sacrificial positive electrode.

The content of the positive electrode active material may be approximately 90 wt% to approximately 99.5 wt% based on 100 wt% of the positive electrode active material layer, and the contents of the binder and the conductive material may be approximately 0.5 wt% to approximately 5 wt%, respectively, based on 100 wt% of the positive electrode active material layer.

The binder is configured to improve binding properties of positive electrode active material particles with one another and with a current collector. Examples of suitable binders include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but the binder is not limited thereto.

The conductive material is configured to provide conductivity to the electrodes, and any material that does not cause chemical changes and is an electronically conductive material may be used as a conductive agent. Examples of the conductive material may include a carbon-based material such as natural graphite, artificial graphite, carbon black, acetylene black, Ketjenblack, a carbon fiber, a carbon nanotube, or the like; a metal-based material including a metal powder or a metal fiber including copper, nickel, aluminium, silver, or the like; a conductive polymer such as a polyphenylene derivative; or a mixture thereof.

The negative electrode active material may include a material configured to perform reversible intercalation/deintercalation of lithium ion, lithium metal, an alloy of lithium metal, a material capable of doping and dedoping lithium, or a transition metal oxide.

The material capable of reversibly intercalating/deintercalating lithium ions is a carbon-based negative electrode active material, and may include, for example, crystalline carbon, amorphous carbon, or a combination thereof. Examples of the crystalline carbon may be amorphous, sheet, flake, spherical or fiber-shaped natural graphite or artificial graphite, and examples of the amorphous carbon may be a soft carbon or a hard carbon, mesophase pitch carbide, fired coke, or the like.

The lithium metal alloy may be lithium and an alloy of metals selected from the group consisting of Na, K, Rb, Cs, Fr, Be, Mg, Ca, Sr, Si, Sb, Pb, In, Zn, Ba, Ra, Ge, Al and Sn.

The material capable of doping and dedoping lithium may be an Si-based negative electrode active material or an Sn-based negative electrode active material. The Si-based negative electrode active material may include silicon, silicon-carbon composite, SiOx (0<x<2), an Si-Q alloy (wherein Q is an element selected from the group consisting of alkali metals, alkaline earth metals, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, an Sn-based alloy, or a combination thereof.

A silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) positioned on the surface of the secondary particle. The amorphous carbon may be positioned between the silicon primary particles-for example, allowing the silicon primary particles to be coated with amorphous carbon. The secondary particles may be distributed in an amorphous carbon matrix.

The silicon-carbon composite may further include crystalline carbon. For example, the silicon-carbon composite may include a core including crystalline carbon and silicon particles and an amorphous carbon coating layer positioned on the surface of the core.

The Si-based negative electrode active material or the Sn-based negative electrode active material may be mixed with a carbon-based negative electrode active material.

The negative electrode active material slurry may further include a binder and/or a conductive material. The binder may include a non-aqueous binder, an aqueous binder, a dry binder, or a combination thereof. The conductive material may be the same as the conductive material included in the positive electrode active material slurry.

The iron removal system 1 may further include a raw material inlet pipe 30 and a raw material outlet pipe 40. The raw material inlet pipe 30 may be a passage through which the active material raw material flows from the raw material tank 10 to the iron removal device 20, and the raw material outlet pipe 40 may be a passage through which the active material raw material from which magnetic foreign substances have been separated (or removed) (hereinafter referred to as purified raw material, for convenience) flows from the iron removal device 20 to the raw material tank 10.

A flow direction I of the active material raw material may be the direction in which the active material raw material comes out of the raw material tank 10, passes through the iron removal device 20, and then returns to the raw material tank 10. The active material raw material may flow from the raw material tank 10 to the iron removal device 20 by a pump, and the flow amount (e.g., flow rate) may be controlled by a valve (e.g., a valve along the inlet pipe 30).

When the active material raw material flows into the iron removal device 20, power may be applied to the iron removal device 20, and a magnetic force may be generated inside the iron removal device 20. The magnetic force generated in the iron removal device 20 may separate magnetic foreign substances from the active material raw material such that the active material raw material may become a purified raw material (or a substantially purified raw material) while passing through (or after passing through) the iron removal device 20.

The purified raw material may flow from the iron removal device 20 to the raw material tank 10 through the raw material outlet pipe 40. After the purified raw material is discharged from the iron removal device 20, the power applied to the iron removal device 20 may be cut off, and residual slurry (e.g., a portion of the active material raw material and the magnetic foreign substances) may be left inside the iron removal device 20.

The iron removal system 1 may supply a washing liquid to the iron removal device 20 to remove the residual slurry inside the iron removal device 20. To this end, the iron removal system 1 may further include a washing liquid inlet pipe 50 and a washing liquid outlet pipe 60.

Washing liquid flows in from the outside into the iron removal device 20 through the washing liquid inlet pipe 50, and washing liquid containing magnetic foreign substances may be discharged from the iron removal device 20 through the washing liquid outlet pipe 60.

A flow direction II of the washing liquid may be a direction in which the washing liquid flows in from the outside, passes through the iron removal device 20, and then is discharged back to the outside. The washing liquid may remove residual slurry inside the iron removal device 20 by flowing inside the iron removal device 20. In one or more embodiments, the washing liquid may be, but is not limited to, N-Methyl-2-pyrrolidone (NMP).

The process of purifying the active material raw material for rechargeable batteries and the washing process of the iron removal device 20 may be performed sequentially in one cycle and may be performed only once, but in one or more embodiments the process may be repeated two or more times (e.g., several times) depending on the amount of magnetic foreign substances remaining in the purified raw material after the purifying process.

If the above process is repeated several times, the content of magnetic foreign substances in the active material raw material may continuously decrease, but the residual slurry inside the iron removal device 20 may continue to accumulate, and the purification efficiency may decrease accordingly. As such, the washing process of the iron removal device 20 may also affect the process of purifying the active material raw material.

### Overall structure of the iron removal device 20

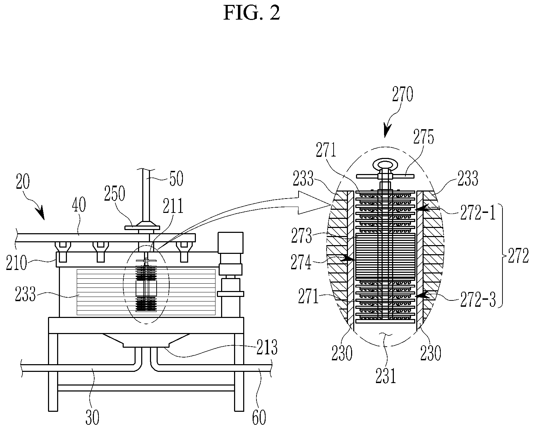

FIG. 2 is a perspective view of a portion of the iron removal device 20 of FIG. 1. Referring to FIG. 2, the iron removal device 20 may include a housing 210, a bobbin 230 accommodated inside the housing 210, and a head 250 on one side (e.g., an upper side based on the orientation illustrated in FIG. 2) of the housing 210.

The housing 210 has a washing liquid inlet 211 and a washing liquid outlet 213. The washing liquid inlet 211 is connected to the head 250, and the washing liquid outlet 213 may be connected to the raw material inlet pipe 30 and the washing liquid outlet pipe 60.

The head 250 may be connected to the raw material outlet pipe 40 and the washing liquid inlet pipe 50. That is, the head 250 is connected to the housing 210 through the washing liquid inlet 211. The washing liquid may be supplied to the head 250 by the washing liquid inlet pipe 50 and discharged from the housing 210 by the washing liquid outlet pipe 60.

The active material raw material may flow into the iron removal device 20 through the washing liquid outlet 213, and washing liquid may be discharged to the outside through the washing liquid outlet 213. Additionally, the purified raw material may be discharged from the iron removal device 20 through the washing liquid inlet 211, and the washing liquid may flow into the iron removal device 20 through the washing liquid inlet 211.

The bobbin 230 may have a washing liquid flow path 231. In the embodiment illustrated in FIG. 2, the washing liquid flow path 231 is provided within the bobbin 230 and is connected from the washing fluid inlet 211 to the washing fluid outlet 213. Accordingly, the washing liquid and active material raw material may flow within the washing liquid flow path 231.

The outer surface of the bobbin 230 may be surrounded by a coil 233. A screen stack 270 in which a plurality of screens 271 and 273 are stacked may be accommodated inside the bobbin 230 (i.e., within the washing liquid flow path 231).

When power is applied to the iron removal device 20, current flows through the coil 233, thereby generating a magnetic field (magnetic force). In operation, the magnetic foreign substances are drawn and attached to the screen stack 270 by the magnetic force, and the active material raw material (which does not include magnetic substances) may flow without being affected by the magnetic force.

After the purified raw material is discharged from the iron removal device 20, power applied to the raw material tank 10 is cut off so that the magnetic force dissipates, and the magnetic foreign substances may remain inside the iron removal device 20 and attached to the screen stack 270.

To remove any remaining magnetic foreign substances, the iron removal system 1 may spray the washing liquid onto the screen stack 270. The washing liquid may be sprayed onto the screen stack 270 to which residual slurry is attached through the head 250 connected to the washing liquid flow path 231 of the bobbin 230. A detailed description of this will be provided later.

The screen stack 270 may include a first screen stack 272, a second screen stack 274 on the first screen stack 272, and a fixing member 275 for maintaining the stacked state or stacked configuration of the first screen stack 272 and the second screen stack 274.

The first screen stack 272 and the second screen stack 274 may include a plurality of stacked first screens 271 and a plurality of second screens 273, respectively.

Each of the second screens 273 may have a structure that makes it relatively more difficult for magnetic foreign substances to pass therethrough compared to the first screen 271.

The screen stack 270 may have a structure in which the second screen stack 274 is stacked between two first screen stacks 272 (e.g., a lower first screen stack 272-3 and an upper first screen stack 272-1). The first screen stack 272 stacked on the second screen stack 274 may be the upper first screen stack 272-1, and the first screen stack 272 on which the second screen stack 274 is stacked may be the lower first screen stack 272-3.

FIG. 2 shows that six first screens 271 are stacked to form the first screen stacks 272 (e.g., upper and lower first screen stacks 272-1 and 272-3), and thirteen second screens 273 are stacked to form the second screen stack 274, but this is merely an embodiment and the configuration of the screen stacks is not limited thereto. A detailed description of each screen 271 and 273 will be provided later.

### First embodiment of head 250

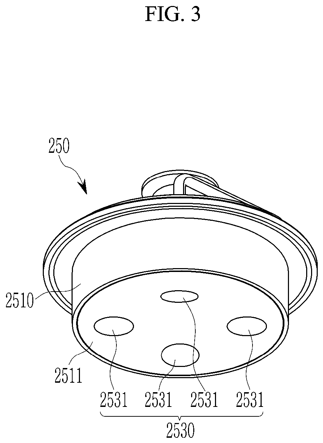

FIG. 3 is a lower perspective view of the head 250 according to the first embodiment of the present disclosure. Referring to FIG. 3, the head 250 includes a body 2510 that accommodates a washing liquid and a plurality of spray parts 2530 that are configured to spray the washing liquid onto the screen stack 270. The body 2510 may include a chamber forming an accommodation space configured to accommodate the washing liquid, and the surface of the body 2510 facing the screen stack 270 may be a washing liquid spray surface 2511. The plurality of spray parts 2530 may include a plurality of spray holes 2531 in the washing liquid spray surface 2511 that are configured to discharge the washing liquid accommodated in the accommodation space of the body 2510.

The head 250 may have various structures configured to effectively remove residual slurry attached to the screen stack 270. As used herein, "effectively remove" may mean the time required for a certain amount of residual slurry to be removed, a reduction in the amount of washing liquid, and/or the amount of residual slurry removed when the same amount of washing liquid is injected.

The configuration of the head 250, such as the shape of the washing liquid spray surface 2511 and the structure of the plurality of spray parts 2530 (e.g., the number and arrangement of the spray holes 2531 and whether or not a nozzle 2533 is installed) may be adjusted to effectively remove the residual slurry (i.e., to improve the washing capacity. The direction and amount of the washing liquid sprayed may vary depending on the shape of the washing liquid spray surface 2511 and the structure of the plurality of spray parts 2530.

In one or more embodiments, the washing liquid spray surface 2511 of the head 250 may have any one of the following shapes: (i) a shape in which no point has a height difference from other points (for convenience, hereinafter referred to as a flat shape), (ii) a shape that is recessed toward the center of the body 2510 (for convenience, hereinafter referred to as a concave shape), or (iii) a shape that protrudes toward the center of the screen stack 270 (for convenience, hereinafter referred to as a convex shape).

According to the first embodiment, illustrated in FIG. 3, the washing liquid spray surface 2511 of the head 250 has a flat shape, and the spray holes 2531 may be arranged at equal (or substantially equal or substantially regular) intervals on the washing liquid spray surface 2511 of the body 2510. The spray holes 2531 may be arranged substantially equidistantly spaced apart from the center of the washing liquid spray surface 2511. The angle between adjacent spray holes 2531 may be approximately 90°. As such, in the first embodiment, the spray holes 2531 may be provided in a so-called simple four-hole configuration (e.g., the spray holes 2531 may be arranged in a square pattern).

### Second embodiment of head 250'

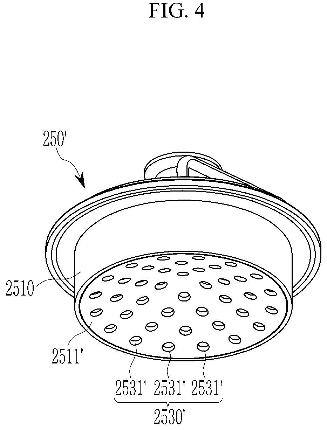

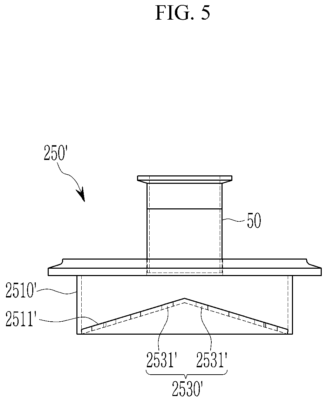

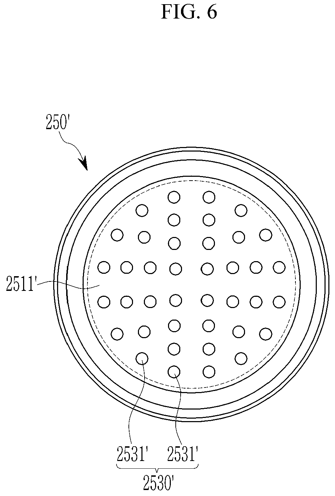

FIG. 4 is a lower perspective view of a head 250' according to the second embodiment of the present disclosure. FIG. 5 is a cross-sectional view of the head 250' of FIG. 4, and FIG. 6 is a bottom view of the head 250' of FIG. 4.

The head 250' of the second embodiment has the same configuration as the head 250 of the first embodiment except for the structure in which the washing liquid is sprayed, so duplicate descriptions will be omitted. Here, "the structure in which the washing liquid is sprayed" may refer to the structure of a washing liquid spray surface 2511' and a spray part 2530'.

Referring to FIGS. 4 to 6, the washing liquid spray surface 2511' of the head 250' has a concave shape and may include a plurality of spray parts 2530', and each of the plurality of spray parts 2530 may include a spray hole 2531' for discharging the washing liquid accommodated in a body 2510'.

In the second embodiment, the spray holes 2531' may be arranged radially on the washing liquid spray surface 2511' as a so-called porous structure. The size of the spray hole 2531' may be smaller than the size of the spray hole 2531 of the head 250 of the first embodiment (shown in FIG. 3), and the number of the spray holes 2531' may also be greater than the number of the spray holes 2531 of the head 250 of the first embodiment. In FIGS. 4 to 6, the number of spray holes 2531' is illustrated as 40, but the number of spray holes 2531' may not be limited thereto (e.g., the number of spray holes 2531 may be less than 40 or more than 40).

As the size of the spray hole 2531' decreases, the head 250' may spray the washing liquid at a relatively higher pressure and focus the spay on a specific region on the screen stack 270 (see FIG. 2). Accordingly, considering the reduced size of the spray hole 2531', the head 250' may include as many spray holes 2531' as possible on the washing liquid spray surface 2511' to properly wash the screen stack 270 (see FIG. 2).

For example, in the head 250' according to the second embodiment, since the size of the spray hole 2531' is smaller than that of the spray hole 2531 of the head 250 according to the first embodiment (shown in FIG. 3), the washing liquid may be sprayed at a relatively higher pressure in a relatively narrower region of the screen stack 270 (see FIG. 2) compared to the first embodiment. In the second embodiment, the number and size of the spray holes 2531' may be appropriately adjusted to wash the screen stack 270 (see FIG. 2) as widely as possible.

For example, in one or more embodiments, the total number of spray holes 2531' may be 40, and the diameter of each spray hole 2531' may be approximately 5% to approximately 6% of the diameter of the washing liquid spray surface 2511'.

### Third embodiment of head 250"

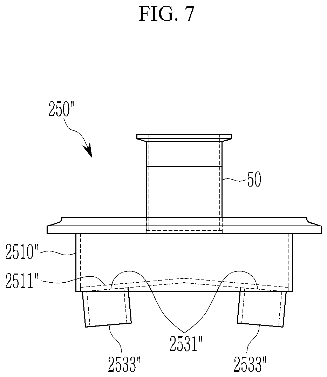

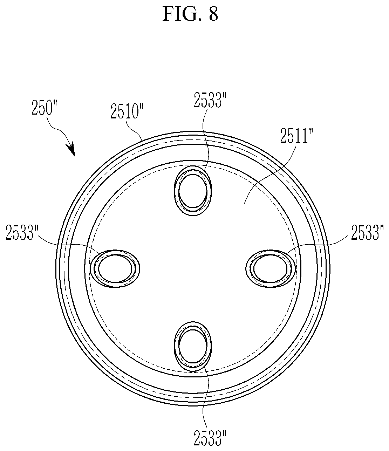

FIG. 7 is a cross-sectional view of a head 250" according to the third embodiment of the present disclosure, and FIG. 8 is a bottom view of the head 250" of FIG. 7. The head 250" of the third embodiment also has the same configuration and structure as the head 250 according to the first embodiment, except for the structure in which the washing liquid is sprayed, and therefore, a duplicate description will be omitted.

Referring to FIGS. 7 and 8, a washing liquid spray surface 2511" of the head 250" may have a concave shape. The washing liquid spray surface 2511" may include four spray parts 2530", and each spray part 2530" may include a spray hole 2531" for discharging the washing liquid accommodated in a body 2510" of the head 250".

Additionally, each spray part 2530" may further include a plurality of nozzles 2533" coupled to the plurality of spray holes 2531" (e.g., one nozzle 2533" coupled to each spray hole 2531"). The nozzle 2533" may adjust the direction and strength of the washing liquid sprayed from the spray hole 2531". In one or more embodiments, the nozzle 2533" may be coupled to the spray hole 2531" such that its central axis is perpendicular (or substantially perpendicular) to the washing liquid spray surface 2511".

In the third embodiment, the spray holes 2531" and the nozzles 2533" may be provided in a so-called four-hole inward configuration (e.g., the spray holes 2531" and the nozzles 2533" may be arranged in a square pattern and the nozzles 2533" may be oriented inward relative to the stacked direction of the screen stack 270).

### Fourth embodiment of head 250‴

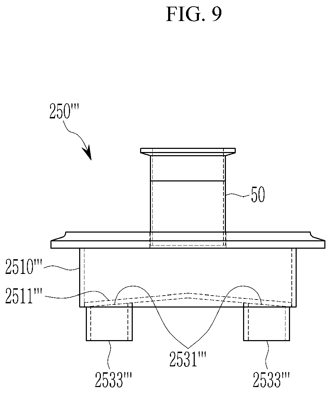

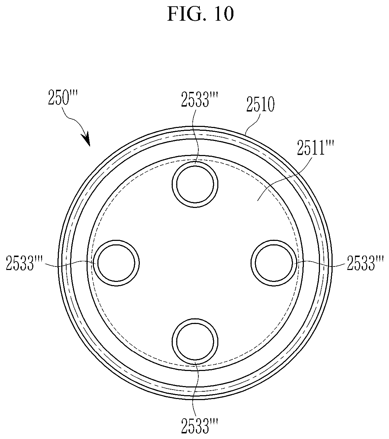

FIG. 9 is a cross-sectional view of a head 250‴ according to the fourth embodiment of the present disclosure, and FIG. 10 is a bottom view of the head 250‴ of FIG. 9. The head 250‴ of the fourth embodiment has the same configuration and structure as the head 250" according to the third embodiment, except for the angle at which the nozzles 2533" are coupled to the spray holes 2531", so a duplicate description will be omitted.

Referring to FIGS. 9 and 10, a nozzle 2533‴ may be connected to a spray hole 2531‴ such that the central axis of the nozzle 2533‴ is arranged in a direction parallel (or substantially parallel) to the stacked direction of the screen stack 270 (see FIG. 2). In the fourth embodiment, the nozzles 2533" may be provided in a so-called four-hole straight line configuration (e.g., the spray holes 2531‴ and the nozzles 2533‴ may be arranged in a square pattern and the nozzles 2533‴ may be oriented substantially straight or parallel relative to the stacked direction of the screen stack 270).

**Table 1**

| | Comparative example | First embodiment | Second embodiment | Third embodiment | Fourth embodiment |
|---|---|---|---|---|---|
| Required time for washing (sec) | 200 | 100 | 20 | 70 | 30 |
| Consumption of washing liquid (kg) | 300 | 270 | 150 | 240 | 180 |

Table 1 shows the required time and the consumption of the washing liquid until the residual slurry inside the iron removal device 20 becomes approximately 0.1% or less using the heads 250, 250', 250", and 250‴ according to the comparative examples and the first to fourth embodiments, after performing the iron removal process for separating magnetic foreign substances from the negative electrode active material slurry.

The head according to the comparative example is a structure in which the body does not have a washing liquid spray surface. In other words, the head according to the comparative example does not have additional spray holes or nozzles and thus the washing liquid flowing in from the inlet pipe is sprayed directly from the inlet pipe onto the screen stack.

Referring to Table 1, it can be seen that it takes 200 seconds for the head according to the comparative example to remove the residual slurry inside the iron removal device. On the other hand, in the case of the first to fourth embodiments of the present disclosure, in which the bodies 2510, 2510', 2510", and 2510‴ have washing liquid spray surfaces 2511, 2511', 2511", and 2511‴, respectively, and a plurality of spray parts 2530, 2531', 3531", and 3531"', respectively, it can be seen that it took 100 seconds, 20 seconds, 70 seconds, and 30 seconds, respectively, to remove the residual slurry to the same extent as with the comparative example.

Accordingly, it can be seen that according to the embodiments of the present disclosure, the residual slurry inside the iron removal device 20 may be removed at a much faster rate than in the comparative example.

In addition, it can be seen that the head according to the comparative example consumed about 300 kg of the washing liquid, but in the case of the head 250 according to the first embodiment of the present disclosure, approximately 270 kg was consumed, the head 250' according to the second embodiment of the present disclosure consumed approximately 150 kg, the head 250" according to the third embodiment consumed approximately 240 kg, and the head 250‴ according to the fourth embodiment consumed approximately 180 kg.

Thus, it can be seen that embodiments of the present disclosure may reduce the consumption of washing liquid compared to the comparative example, and thereby reduce the cost of the washing process, while removing the residual slurry inside the iron removal device 20 to the same extent.

### Detailed structure of screen stack 270

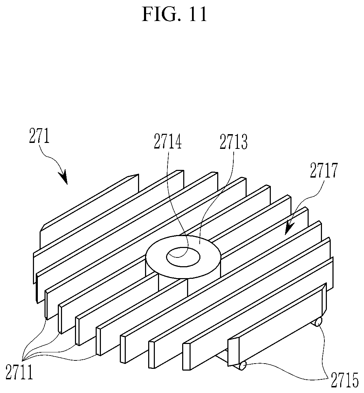

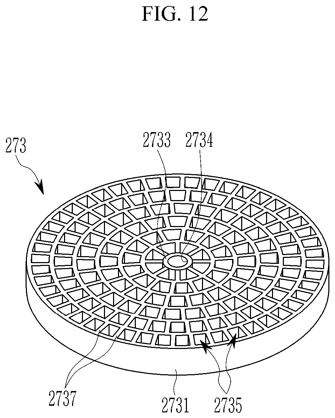

FIG. 11 is a perspective view of the first screen 271 of the screen stack 270 of FIG. 2, and FIG. 12 is a perspective view of the second screen 273 of the screen stack 270 of FIG. 2. Referring to FIGS. 11 and 12, the first screen 271 may include a plurality of metal plates 2711, a fastener 2713 having a through hole 2714 and positioned at the center of the first screen 271, and rods 2715 connecting the plurality of metal plates 2711 together. The plurality of metal plates 2711 may be aligned and spaced apart from each other equidistantly (or substantially equidistantly).

The first screen 271 may have a plurality of slits 2717. That is, two adjacent metal plates 2711 among the plurality of metal plates 2711 may be arranged so that a slit 2717 is formed between them. Active material raw material and/or washing liquid may flow through the slits 2717.

The first screen 271 may have the metal plates 2711 arranged such that the planar shape of the first screen 271 has a profile or an outline of a substantially circular plate. The first screen 271 may have a substantially circular shape, but may have a structure without a border and thus without an outer peripheral surface (e.g., without a circumferential surface).

In one or more embodiments, the closer the metal plate 2711 is positioned to the center of the first screen 271, the longer the metal plate 2711 may be. However, in the case of the metal plate 2711 connected to the fastener 2713 positioned at the center of the first screen 271, the length of the metal plate 2711 may be calculated to include the length of the two metal plates 2711 and the length of the fastener 2713 because the two metal plates 2711 are connected to the fastener 2713. For example, the length of the metal plate 2711 at the exact center of the first screen 271 may be calculated by adding the length of the two metal plates 2711 connected to opposite sides of the fastener 2713 as well as the diameter of the fastener 2713.

The second screen 273 may include a plurality of rings 2731 and a fastener 2733 having a through hole 2734 in the center. The plurality of rings 2731 may be sequentially arranged in a structure in which the diameter of the ring becomes smaller as it approaches the center of the second screen 273.

The second screen 273 may have a plurality of grid patterns 2735. That is, adjacent rings 2731 are connected by partition walls 2737, so that the grid pattern 2735 may be positioned between the rings 2731 and between the partition walls 2737. Each grid pattern 2735 may be, but is not limited to, the shape of a triangle or a rhombus.

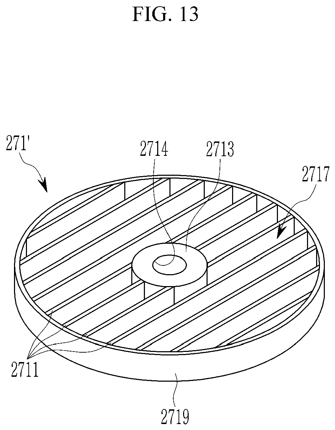

FIG. 13 is a perspective view of a first screen 271' according to another embodiment of the present disclosure. Referring to FIG. 13, the first screen 271' may further include a first guide 2719 along the outer circumference of the first screen 271 and connected to both ends of each of the metal plates 2711. The first screen 271' includes the first guide 2719, which is configured to prevent (or at least mitigate) the washing liquid from splashing toward the ends of the metal plates 2711 when the washing liquid is sprayed onto the screen stack 270. In this manner, the first guide 2719 is configured to prevent (or at least mitigate) waste of washing liquid and thereby enable efficient washing.

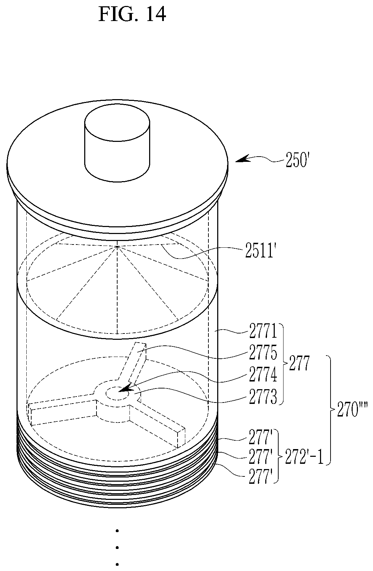

FIG. 14 illustrates a screen stack 270"" including a spacer 277 according to the fifth embodiment of the present disclosure. The screen stack 270'''' may further include the spacer 277 at the top of the screen stack 270"". The spacer 277 may be between the screen stack 270"" and the washing liquid spray surface 2511' of the head 250'. In FIG. 14, the plurality of spray parts of the head 250' are not shown, for convenience.

Referring to FIG. 14, the spacer 277 may include a second guide 2771, a ring member 2773 inside the second guide 2771, and at least one connecting member 2775 connecting the second guide 2771 to the ring member 2773.

The outer diameter of the ring member 2773 may be smaller than the outer diameter of the second guide 2771, and the height of the second guide 2771 may be greater than the height of the ring member 2773. The second guide 2771 is configured to permit the washing liquid to pass between the head 250 and the screen stack 270, thereby preventing (or at least mitigating) it from splashing outward and leaking.

The ring member 2773 has a through hole 2774, and the spacer 277 may be fixed on the screen stack 270 through the fixing member 275 (see FIG. 2) inserted into the through hole 2774.

**Table 2**

| | Residual slurry | Washing condition of residual slurry | | |
|---|---|---|---|---|
| | | Upper first screen stack | Middle second screen stack | Lower first screen stack |
| Comparative example | 0.58kg | B | C | C |
| Second embodiment | 0.46kg | A | C | C |
| Fifth embodiment | 0.34kg | A | A | A |

Table 2 shows a comparison of the washing results of an iron removal device including a head according to the comparative example, an iron removal device including a head according to the second embodiment of the present disclosure, and an iron removal device according to the fifth embodiment of the present disclosure.

The iron removal device according to the comparative example and the iron removal device according to the second embodiment include a head according to the comparative example of Table 1 and the head 250' according to the second embodiment, respectively, and the iron removal device according to the fifth embodiment includes the head 250' according to the second embodiment, the first screen 271' including the first guide 2719, and the screen stack 270"" including the spacer 277 shown in FIG. 14.

In Table 2, an "A" grade may mean a case where the amount of residual slurry is less than approximately 0.1%, a "B" grade may mean the amount of residual slurry is from approximately 0.1% to approximately 0.2%, and a "C" grade may mean the amount of residual slurry exceeds approximately 0.2%.

Referring to Table 2, it can be seen that in the case of the comparative example, when washing is performed once, the amount of residual slurry is 0.58 kg, and the upper first screen stack 272-1 is in a "B" grade washing condition, but the second screen stack 274 and the lower first screen stack 272-3 are in a "C" grade washing condition.

In the second embodiment, when washing is performed once, the amount of residual slurry is reduced to 0.46 kg compared to the comparative example, and the washing condition of the upper first screen stack 272-1 is also improved to an "A" grade.

In the fifth embodiment, the amount of residual slurry is reduced to 0.34 kg compared to the comparative example and the second embodiment, and the washing conditions of not only the upper first screen stack 272-1 but also the second screen stack 274 and the lower first screen stack 272-3 are improved to an "A" grade.

Accordingly, by changing the head structure, it is possible to improve the washing effect by adjusting the spray pressure and spray direction of the washing liquid to suit the structure of the screen stack 270, and in an embodiment in which the first screen 271 and the screen stack 270 each include the first guide 2719 and the spacer 277, the washing liquid may be prevented (or at least mitigated) from splashing to the sides, thereby further improving the washing effect.

While the embodiments of the present disclosure have been described in detail, it is to be understood that the disclosure is not limited to the disclosed embodiments, but on the contrary, is intended to cover various modifications and equivalent arrangements included within the scope of the appended claims.

**Description of Symbols**

| | | | |
|---|---|---|---|
| 1: | Iron removal system | 10: | Raw material tank |
| 20: | Iron removal device | 30: | Raw material inlet pipe |
| 40: | Raw material outlet pipe | 50: | Washing liquid inlet pipe |
| 60: | Washing liquid outlet pipe | 210: | Housing |
| 211: | Washing liquid inlet | 213: | Washing liquid outlet |
| 230: | Bobbin | 231: | Washing liquid flow path |
| 233: | Coil | 250: | Head |
| 270: | Screen stack | 271: | First screen |
| 272: | First screen stack | 272-1: | Upper first screen stack |
| 272-3: | Lower first screen stack | 273: | Second screen |
| 274: | Second screen stack | 275: | Fixing member |
| 277: | Spacer | 2510: | Body |
| 2511: | Washing liquid spray surface | 2530: | Spray part |
| 2531: | Spray hole | 2533: | Nozzle |
| 2711: | Metal plate | 2713: | Fastener |
| 2714: | Through hole | 2715: | Rod |
| 2717: | Slit | 2719: | First guide |
| 2731: | Ring | 2733: | Fastener |
| 2734: | Through hole | 2735: | Grid pattern |
| 2737: | Partition wall | 2771: | Second guide |
| 2773: | Ring member | 2774: | Through hole |
| 2775: | Connecting member | | |

## Claims

1. An iron removal device, comprising:
a housing comprising a washing liquid inlet and a washing liquid outlet;
a head coupled to the housing and configured to spray a washing liquid onto a screen stack on a washing liquid flow path leading from the washing liquid inlet to the washing liquid outlet within the housing;
a washing liquid inlet pipe coupled to the head and configured to supply the washing liquid to the head; and
a washing liquid outlet pipe coupled to the housing and configured to discharge the washing liquid out from the housing,
wherein the head comprises:
a body accommodating the washing liquid; and
a plurality of spray parts separately on a washing liquid spray surface of the body facing the screen stack and configured to spray the washing liquid onto the screen stack.

2. The iron removal device as claimed in claim 1, wherein each of the plurality of spray parts comprises a spray hole configured to discharge the washing liquid accommodated in the body.

3. The iron removal device as claimed in claim 2, wherein the plurality of spray parts is substantially equidistantly arranged on the washing liquid spray surface of the body.

4. The iron removal device as claimed in claim 3, wherein an angle between adjacent spray parts of the plurality of spray parts is approximately 90 degrees.

5. The iron removal device as claimed in any one of claims 1 to 4, wherein the washing liquid spray surface of the body has a recessed shape extending toward a center of the body.

6. The iron removal device as claimed in any one of claims 1 to 5, wherein the number of the plurality of spray parts is at least 40.

7. The iron removal device as claimed in claim 6, wherein the plurality of spray parts is arranged radially on the washing liquid spray surface of the body.

8. The iron removal device as claimed in any one of claims 2 to 7, wherein the plurality of spray parts further comprises a plurality of nozzles, each nozzle of the plurality of nozzles being coupled to the spray hole of one of the plurality of spray parts.

9. The iron removal device as claimed in claim 8, wherein a central axis of each nozzle is substantially perpendicular to the washing liquid spray surface of the body.

10. The iron removal device as claimed in claim 8, wherein a central axis of each nozzle is substantially parallel to a stacked direction of the screen stack.

11. The iron removal device as claimed in any one of claims 1 to 10, wherein the screen stack comprises:
a first screen comprising a plurality of slits;
a second screen comprising a plurality of grid patterns; and
a fixing member configured to fix a stacked configuration of the first screen and the second screen, and
wherein a second screen stack in which a plurality of the second screens are stacked is between two first screen stacks in which a plurality of the first screens are stacked.

12. The iron removal device as claimed in claim 11, wherein the first screen comprises a first guide surrounding an outer surface.

13. The iron removal device as claimed in claim 11 or claim 12, wherein the screen stack further comprises:
a spacer on one of the two first screen stacks closest to the head among the two first screen stacks.

14. The iron removal device as claimed in claim 13, wherein the spacer comprises:
a second guide;
a ring member inside the second guide, wherein an outer diameter of the ring member is smaller than an outer diameter of the second guide; and
a connecting member coupling the second guide to the ring member.

15. The iron removal device as claimed in claim 14, wherein a height of the second guide is greater than a height of the ring member.
